# EUROPEAN PATENT APPLICATION

(11) **EP 4 723 428 A1**
(43) Date of publication of application: **08.04.2026**
(21) Application number: 24829787.1
(22) Date of filing: 25.01.2024
(51) Int. Cl.: H02J 9/06, H02J 7/00

(54) **UNINTERRUPTIBLE POWER SUPPLY, AND POWER SUPPLY SYSTEM**

(30) Priority: 27.06.2023 CN 202310770674
(71) Applicant: Huawei Digital Power Technologies Co., Ltd., Shenzhen, Guangdong 518043 (CN)
(72) Inventor: HUANG, Zhuyong, Shenzhen, Guangdong 518043 (CN)
(74) Representative: Gill Jennings & Every LLP
(86) International application number: PCT/CN2024/074086
(87) International publication number: WO 2025/001124

(57) **Abstract**

This application provides an uninterruptible power supply and a power supply system, to reduce costs of the uninterruptible power supply and improve circuit utilization. The uninterruptible power supply includes a utility power input, a switch circuit, a rectifier circuit, an inverter circuit, and a charge/discharge circuit. The switch circuit includes a first switch, a second switch, and a third switch. When an alternating current input by the utility power input is faulty, a controller controls the charge/discharge circuit to discharge electric energy stored in an energy storage apparatus to a bus; and after the charge/discharge circuit supplies power to the bus, controls the first switch to disconnect the utility power input from the rectifier circuit, controls the second switch to connect the energy storage apparatus and the rectifier circuit, and controls the third switch to disconnect the energy storage apparatus from the charge/discharge circuit, to enable the electric energy output by the energy storage apparatus to be input to the rectifier circuit. The rectifier circuit performs power conversion on the electric energy input by the energy storage apparatus and output the electric energy to the bus, and the inverter circuit converts a direct current of the bus into an alternating current and output the alternating current to a load.

## Description

### CROSS-REFERENCE TO RELATED APPLICATIONS

This application claims priority to Chinese Patent Application No. 202310770674.9, filed with the China National Intellectual Property Administration on June 27, 2023 and entitled "UNINTERRUPTIBLE POWER SUPPLY AND POWER SUPPLY SYSTEM", which is incorporated herein by reference in its entirety.

### TECHNICAL FIELD

This application relates to the field of power electronics technologies, and in particular, to an uninterruptible power supply and a power supply system.

### BACKGROUND

An uninterruptible power supply (uninterruptible power supply, UPS) is a power supply that includes an energy storage apparatus, and is mainly configured to provide an uninterruptible power supply for some electronic devices that have high requirements on power stability. The UPS mainly includes a rectifier circuit (AC/DC), an inverter circuit (DC/AC), and a charge/discharge circuit (DC/DC). The rectifier circuit and the charge/discharge circuit are completely independent of each other, and supply energy to a direct current bus in a mode of supplying power through utility power and a mode of supplying power through the energy storage apparatus, respectively. Then, the inverter circuit converts a direct current into an alternating current, and supplies the alternating current to a load. Specifically, when the utility power is normally input, the UPS converts the utility power into a stable direct current by using the rectifier circuit, and then converts the direct current into an alternating current by using the inverter circuit, and supplies the alternating current to the load for use. In this case, the UPS is an alternating current utility power voltage regulator, and may also reversely charge the energy storage apparatus by using the charge/discharge circuit. When the utility power fails due to an accident or is interrupted, the UPS immediately switches to the mode of supplying power through the energy storage apparatus, first converts energy of the energy storage apparatus into a stable direct current by using the charge/discharge circuit, then converts the stable direct current by using the inverter circuit, and continues to supply a 380 V three-phase alternating current or a 220 V single-phase alternating current to the load, to maintain normal operation of the load and keep power supplied to the load uninterrupted.

From the foregoing working principle of the UPS, it can be learned that the charge/discharge circuit remains in a working state in the mode of supplying power through the energy storage apparatus, a power of the charge/discharge circuit needs to meet a rated power of the UPS, and a required circuit size is large. In addition, the rectifier circuit is in a working state only in the mode of supplying power through utility power and is in an idle state in the mode of supplying power through the energy storage apparatus, which reduces circuit utilization and leads to disadvantages of costs and space.

### SUMMARY

Embodiments of this application provide an uninterruptible power supply and a power supply system, to reduce costs of the uninterruptible power supply and improve circuit utilization of the uninterruptible power supply.

To achieve the foregoing objective, this application uses the following technical solutions.

According to a first aspect, an embodiment of this application provides an uninterruptible power supply, specifically including a utility power input, a switch circuit, a rectifier circuit, an inverter circuit, and a charge/discharge circuit. The switch circuit may specifically include a first switch, a second switch, and a third switch. A first end of the first switch is connected to the utility power input, a second end of the first switch is connected to an input of the rectifier circuit, and the first switch may control a connected/disconnected state between the utility power input and the rectifier circuit. A first end of the second switch is configured to connect to an energy storage apparatus, a second end of the second switch is connected to the input of the rectifier circuit, and the second switch may control a connected/disconnected state between the energy storage apparatus and the rectifier circuit. A first end of the third switch is configured to connect to the energy storage apparatus, a second end of the third switch is connected to a first end of the charge/discharge circuit, and the third switch can control a connected/disconnected state between the charge/discharge circuit and the energy storage apparatus. When being used in a small UPS, the energy storage apparatus may be built in the UPS or may be built outside the UPS. When being used in a medium or large-size UPS, the energy storage apparatus has a large size, and is usually built outside the UPS. The energy storage apparatus may be specifically a component, like a battery pack, which has a charge/discharge function. An output of the rectifier circuit is connected to a bus, and the rectifier circuit is configured to convert a received alternating current or electric energy of the energy storage apparatus into a direct current and supply power to the bus. A second end of the charge/discharge circuit is connected to the bus, and the charge/discharge circuit is configured to supply power to the bus or charge the energy storage apparatus from the bus. An input of the inverter circuit is connected to the bus, an output of the inverter circuit is configured to connect to a load, and the inverter circuit is configured to convert a direct current of the bus into an alternating current and supply power to the load.

In embodiments of this application, the switch circuit, the rectifier circuit, the inverter circuit, and the charge/discharge circuit may include components such as a switch, a switching transistor, a diode, an inductor, and a capacitor. Working statuses of the switch circuit, the rectifier circuit, the inverter circuit, and the charge/discharge circuit may be implemented by adjusting working statuses of these components. Specifically, the working statuses of the foregoing components may be adjusted by using a controller, that is, the uninterruptible power supply may further include the controller. The controller can control the connected/disconnected state of the switch circuit, control the rectifier circuit to convert the received electric energy into a direct current and supply power to the bus, control the inverter circuit to convert the direct current of the bus into an alternating current, and control a charge/discharge state of the charge/discharge circuit. In a specific implementation, the controller may be any one of a microcontroller unit (microcontroller unit, MCU), a central processing unit (central processing unit, CPU), and a digital signal processor (digital signal processor, DSP). Certainly, a specific form of the controller is not limited to the foregoing examples.

When an alternating current input by the utility power input is normal, for example, the alternating current is determined to be normal by determining that voltage amplitude of the alternating current received at the utility power input is within a specified threshold range, the uninterruptible power supply provided in embodiments of this application is in a mode of supplying power through utility power, and the controller may control the first switch to connect the alternating current and the rectifier circuit, control the second switch to connect the energy storage apparatus and the charge/discharge circuit, and control the third switch to disconnect the energy storage apparatus from the rectifier circuit. In addition, the controller controls the rectifier circuit to convert the received alternating current into a direct current, control the inverter circuit to convert the direct current of the bus into an alternating current and supply power to the load, and control the charge/discharge circuit to charge the energy storage apparatus.

When an alternating current input by the utility power input is faulty, which may be caused by interruption of the alternating current or an accident power failure, for example, the alternating current is determined to be faulty by determining that voltage amplitude of the alternating current received at the utility power input is beyond the specified threshold range, the uninterruptible power supply provided in embodiments of this application is switched from the mode of supplying power through utility power to a mode of supplying power through the energy storage apparatus, and the controller may control the charge/discharge circuit to quickly switch from a charging state to a discharging state, and discharge the electric energy stored in the energy storage apparatus to the bus to quickly and reversely supply power to the bus. Because only switching transistors inside the charge/discharge circuit is controlled and switched, this process is very quick, and switching may be completed within dozens of microseconds, to ensure that the direct current of the bus is not powered off. After controlling the charge/discharge circuit to supply power to the bus, the controller may control the first switch to disconnect an alternating current power supply from the rectifier circuit, and then control the second switch to connect the energy storage apparatus and the rectifier circuit, to enable the electric energy output by the energy storage apparatus to be input to the rectifier circuit, and enable the uninterruptible power supply to work in the mode of supplying power through the energy storage apparatus. In addition, after the uninterruptible power supply starts to work in the mode of supplying power through the energy storage apparatus, the controller may control the third switch to disconnect the energy storage apparatus from the charge/discharge circuit, to enable the charge/discharge circuit to stop reversely supply power to the bus. The rectifier circuit may perform power conversion on the electric energy received from the energy storage apparatus and output the electric energy to the bus, and the inverter circuit converts the direct current of the bus into an alternating current and outputs the alternating current to the load.

Specifically, each switch included in the switch circuit may be specifically implemented by using a relay. Based on a characteristic of the relay, a process of switching between the connected state and the disconnected state requires several milliseconds to dozens of milliseconds, that is, it takes only several milliseconds to dozens of milliseconds for the charge/discharge circuit to reversely supply power to the bus. Because time for the charge/discharge circuit to reversely supply power to the bus is short, the charge/discharge circuit can work at a power that exceeds a rated power when reversely supplying power. For example, an actual discharge power of the charge/discharge circuit is greater than twice a rated discharge power of the charge/discharge circuit. This can reduce a current specification of a circuit component, to reduce costs and a size.

In some embodiments of this application, the bus in the uninterruptible power supply may specifically include a positive bus, a negative bus, a first bus capacitor, and a second bus capacitor. The first bus capacitor and the second bus capacitor are connected in series between the positive bus and the negative bus, and a midpoint of the first bus capacitor and the second bus capacitor is connected to a neutral wire. The positive bus is configured to transmit a positive direct current, the negative bus is configured to transmit a negative direct current, the first bus capacitor is configured to store electric energy of the positive bus, and the second bus capacitor is configured to store electric energy of the negative bus. During actual use, the inverter circuit converts the electric energy stored in the first bus capacitor into a positive half-cycle signal of a second alternating current, and converts the electric energy stored in the second bus capacitor into a negative half-cycle signal of the alternating current. A value of the electric energy stored in the first bus capacitor is equal to a value of the electric energy stored in the second bus capacitor. When a power-consuming device, namely, the load, has different requirements for positive half-cycle electric energy and negative half-cycle electric energy of the alternating current, the electric energy stored in the first bus capacitor and the electric energy stored in the second bus capacitor cannot meet the requirements of the power-consuming device for electric energy. To ensure that the electric energy stored in the first bus capacitor and the electric energy stored in the second bus capacitor can meet the requirements of the power-consuming device, a balanced circuit needs to be disposed in the uninterruptible power supply. The balanced circuit can implement electric energy adjustment between the positive bus and the negative bus, so that adjusted electric energy of the positive bus and adjusted electric energy of the negative bus can meet the requirements of the power-consuming device for electric energy.

In view of this, in some embodiments of this application, the switch circuit may further include a fourth switch, a first end of the fourth switch is configured to connect to the neutral wire, and a second end of the fourth switch is connected to the first end of the charge/discharge circuit. In some embodiments of this application, the third switch and the fourth switch may form a single-pole double-throw switch. Alternatively, in some other embodiments of this application, the third switch and the fourth switch may be two separate single-pole single-throw switches. This is not limited herein. After the uninterruptible power supply starts to work in the mode of supplying power through the energy storage apparatus, the controller controls the third switch to be turned off, and controls the fourth switch to connect the charge/discharge circuit and the neutral wire, so that the charge/discharge circuit is used as a balanced circuit. In other words, the controller controls the switching transistor in the charge/discharge circuit to be turned on, to enable a bus at a higher voltage in the positive bus and the negative bus to release the voltage to the neutral wire. This balances a voltage difference between the positive bus and the negative bus, so that the uninterruptible power supply works more stably when supplying power to the load whose requirements for positive and negative electric energy are unbalanced.

When the alternating current input by the utility power input is restored, the uninterruptible power supply provided in embodiments of this application is switched from the mode of supplying power through the energy storage apparatus back to the mode of supplying power through utility power, the controller may control the fourth switch to disconnect the charge/discharge circuit from the neutral wire, control the third switch to connect the energy storage apparatus and the charge/discharge circuit, and control the charge/discharge circuit to discharge the electric energy stored in the energy storage apparatus to the bus. The charge/discharge circuit is configured to supply power to the bus, to ensure that the direct current of the bus is not powered off in a process of switching to the mode of supplying power through utility power. After controlling the charge/discharge circuit to supply power to the bus, the controller may control the second switch to disconnect the energy storage apparatus from the rectifier circuit, and control the first switch to connect an alternating current input and the rectifier circuit, so that the rectifier circuit converts the alternating current input by the utility power input into a direct current, and then supplies power to the bus. Therefore, the uninterruptible power supply starts to work in the mode of supplying power through utility power. In addition, the controller may further control the charge/discharge circuit to charge the energy storage apparatus.

In embodiments of this application, in both the mode of supplying power through utility power and the mode of supplying power through the energy storage apparatus, the rectifier circuit is in the working status. In other words, in the mode of supplying power through utility power and the mode of supplying power through the energy storage apparatus, the rectifier circuit shares a topology, to reduce a size and costs of the circuit. The charge/discharge circuit can be used as a charge circuit, a discharge circuit, and a bus balanced circuit. A topology of the charge/discharge circuit is fully utilized, to reduce a size and costs of the circuit. In addition, the charge/discharge circuit supplies power to the bus for a short time, to support the switch circuit in supplying energy to the bus in a process of switching between the mode of supplying power through utility power and the mode of supplying power through the energy storage apparatus, so that the power that is reversely supplied by the charge/discharge circuit can be applied at a power that exceeds a rated power. For example, an actual discharge power of the charge/discharge circuit is greater than twice the rated discharge power of the charge/discharge circuit, to reduce current specifications of a circuit component. This reduces costs and a size. In addition, in the mode of supplying power through the energy storage apparatus, the charge/discharge circuit can be reused as the bus balanced circuit through switching of the switch circuit. Reusing the circuit can reduce the size and the costs of the circuit.

In some embodiments of this application, the first end of the second switch may be connected to a positive electrode of the energy storage apparatus, and correspondingly, a negative electrode of the energy storage apparatus is connected to the negative bus in the bus, so that the second switch can control a connected/disconnected state between the positive electrode of the energy storage apparatus and the rectifier circuit. The first end of the third switch may be connected to the positive electrode of the energy storage apparatus, so that the third switch can control a connected/disconnected state between the charge/discharge circuit and the positive electrode of the energy storage apparatus.

In some other embodiments of this application, the first end of the second switch may be connected to a negative electrode of the energy storage apparatus, and correspondingly, a positive electrode of the energy storage apparatus is connected to the positive bus in the bus, so that the second switch can control a connected/disconnected state between the negative electrode of the energy storage apparatus and the rectifier circuit. The first end of the third switch may be connected to the negative electrode of the energy storage apparatus, so that the third switch can control a connected/disconnected state between the charge/discharge circuit and the negative electrode of the energy storage apparatus.

In some other embodiments of this application, the rectifier circuit may specifically include a first inductor, a first switching transistor, a second switching transistor, a third switching transistor, and a diode. A first end of the first inductor is connected to a first output of the switch circuit, and a second end of the first inductor is connected to a first electrode of the second switching transistor. A second electrode of the second switching transistor is connected to a second electrode of the third switching transistor, and a first electrode of the third switching transistor is connected to the neutral wire.

When the first end of the second switch and the first end of the third switch are both connected to the positive electrode of the energy storage apparatus, a first electrode of the first switching transistor is connected to the negative bus, and a second electrode of the first switching transistor is connected to the second end of the first inductor. A positive electrode of the diode is connected to the second end of the first inductor, and a negative electrode of the diode is connected to the positive bus.

When the first end of the second switch and the first end of the third switch are both connected to the negative electrode of the energy storage apparatus, the first electrode of the first switching transistor is connected to the second end of the first inductor, and the second electrode of the first switching transistor is connected to the positive bus. The positive electrode of the diode is connected to the negative bus, and the negative electrode of the diode is connected to the second end of the first inductor.

In some embodiments of this application, the charge/discharge circuit may include a second inductor, a fourth switching transistor, a fifth switching transistor, a first capacitor, and a second capacitor. A first end of the second inductor is connected to a second output of the switch circuit, and a second end of the second inductor is separately connected to a first end of the fourth switching transistor and a second end of the fifth switching transistor. The fourth switching transistor, the fifth switching transistor, the first capacitor, and the second capacitor may form a low-power charge/discharge circuit of a half-bridge topology. A power of the low-power charge/discharge circuit is approximately 30% of a power of a full-power charge/discharge circuit. However, the low-power charge/discharge circuit may achieve effect of the full-power charge/discharge circuit by working for a short time at a power that exceeds a rated power. In comparison with the full-power charge/discharge circuit, costs and a size of the low-power charge/discharge circuit may be reduced. Specifically, a second end of the fourth switching transistor is connected to the positive bus, and a first end of the fifth switching transistor is connected to the negative bus. The first capacitor is connected between the positive bus and the neutral wire, that is, the first capacitor and the first bus capacitor are disposed in parallel. The second capacitor is connected between the negative bus and the neutral wire, that is, the second capacitor and the second bus capacitor are disposed in parallel. When the charge/discharge circuit is used as a balanced circuit, the controller may control the fourth switching transistor to be turned on and control the fifth switching transistor to be turned off when determining that the voltage of the positive bus is greater than the voltage of the negative bus, so that the voltage of the positive bus is released to the neutral wire. When determining that the voltage of the negative bus is greater than the voltage of the positive bus, the controller may control the fifth switching transistor to be turned on and control the fourth switching transistor to be turned off, so that the voltage of the negative bus is released to the neutral wire.

In embodiments of this application, the inverter circuit may use a two-level half-bridge topology, a T-type or I-type three-level half-bridge topology, or another topology. For example, the inverter circuit uses a T-type three-level topology. The inverter circuit may include a third inductor, a sixth switching transistor, a seventh switching transistor, an eighth switching transistor, and a ninth switching transistor. A first end of the sixth switching transistor is connected to the neutral wire, and a second end of the sixth switching transistor is connected to a second end of the seventh switching transistor. A first end of the third inductor is connected to a first end of the seventh switching transistor, and a second end of the third inductor is connected to an output used to supply power to the load. A first end of the eighth switching transistor is connected to the first end of the third inductor, and a second end of the eighth switching transistor is connected to the positive bus. A first end of the ninth switching transistor is connected to the negative bus, and a second end of the ninth switching transistor is connected to the first end of the third inductor.

The switching transistor in the rectifier circuit, the inverter circuit, and the charge/discharge circuit provided in embodiments of this application may include a diode and a transistor that are connected in parallel. Specifically, the switching transistor may be a metal-oxide-semiconductor field-effect transistor (metal-oxide-semiconductor field-effect transistor, MOSFET), and the MOSFET naturally has a reverse diode function. Alternatively, the switching transistor may be an insulated-gate bipolar transistor (insulated-gate bipolar transistor, IGBT) or a bipolar junction transistor (bipolar junction transistor, BJT) with a built-in diode. Alternatively, the switching transistor may be an independent diode that is connected in parallel to a gallium nitride (GaN) field-effect transistor, a silicon carbide (SiC) power transistor, or one or more of a plurality of transistor components. Types of switching transistors are not enumerated in embodiments of this application.

Specifically, each switching transistor may include a first electrode, a second electrode, and a control electrode. The control electrode is configured to control the switching transistor to be turned on or turned off. When the switching transistor is turned on, a current may be transmitted between the first electrode and the second electrode of the switching transistor. When the switching transistor is turned off, a current cannot be transmitted between the first electrode and the second electrode of the switching transistor. The MOSFET is used as an example. The control electrode of the switching transistor is a gate, the first electrode of the switching transistor may be a source of the switching transistor, and the second electrode may be a drain of the switching transistor. Alternatively, the first electrode may be a drain of the switching transistor, and the second electrode may be a source of the switching transistor.

In some other embodiments of this application, an alternating current is connected to the uninterruptible power supply, and a three-phase alternating current may also be output, for example, a phase A, a phase B, and a phase C. Correspondingly, the uninterruptible power supply may include three rectifier circuits and three inverter circuits that correspond to phases (namely, the phase A, the phase B, and the phase C) of alternating currents of the three-phase alternating current. Each rectifier circuit is configured to convert the received electric energy of the energy storage apparatus or a corresponding phase (namely, the phase A, the phase B, or the phase C) of alternating current into a direct current, and output the direct current to the bus. Each inverter circuit is configured to convert the direct current of the bus into an alternating current and supply power to the load. The rectifier circuit corresponding to each phase of alternating current may include a first inductor, a first switching transistor, a second switching transistor, a third switching transistor, and a diode. The inverter circuit corresponding to each phase of alternating current may include a third inductor, a sixth switching transistor, a seventh switching transistor, an eighth switching transistor, and a ninth switching transistor. For topology structures of each rectifier circuit and each inverter circuit, refer to the topology structure of a single-phase alternating current. Details are not described herein.

Correspondingly, the switch circuit may include three first switches and three second switches that correspond to the phases (namely, the phase A, the phase B, and the phase C) of alternating currents of the three-phase alternating current. A first end of each first switch is configured to receive a corresponding phase of alternating current, a second end of each first switch is connected to an input of the rectifier circuit corresponding to one phase of alternating current, and a second end of each second switch is connected to an input of the rectifier circuit corresponding to one phase of alternating current.

According to a second aspect, an embodiment of this application provides a power supply system, including an energy storage apparatus and an uninterruptible power supply. The uninterruptible power supply is the uninterruptible power supply provided in any possible design of the first aspect. Repeated parts are not described again. The energy storage apparatus may be connected to a first end of a second switch in a switch circuit in the uninterruptible power supply. Specifically, the power supply system is connected between an alternating current power supply and a power-consuming device, and the power supply system is configured to supply power to the power-consuming device via an alternating current output by the alternating current power supply. When being used in a small power supply system, the energy storage apparatus may be built in the UPS or may be built outside the UPS. When being used in a medium or large-size power supply system, the energy storage apparatus has a large size, and is usually built outside the UPS.

For technical effect that can be achieved in the second aspect, refer to the descriptions of technical effect that can be achieved in any one of the possible designs in the first aspect. Details are not described herein again.

### BRIEF DESCRIPTION OF DRAWINGS

FIG. 1 is a diagram of a structure of an uninterruptible power supply according to an embodiment of this application;
FIG. 2 is a diagram of another structure of an uninterruptible power supply according to an embodiment of this application;
FIG. 3 is a diagram of another structure of an uninterruptible power supply according to an embodiment of this application;
FIG. 4 is a diagram of a specific circuit structure of an uninterruptible power supply according to an embodiment of this application;
FIG. 5 is a diagram of another specific circuit structure of an uninterruptible power supply according to an embodiment of this application;
FIG. 6 is a diagram of another specific circuit structure of an uninterruptible power supply according to an embodiment of this application;
FIG. 7 is a diagram of another specific circuit structure of an uninterruptible power supply according to an embodiment of this application;
FIG. 8a is a diagram of a working principle of a rectifier circuit in a positive half cycle with an uninterruptible power supply being in a mode of supplying power through utility power according to an embodiment of this application;
FIG. 8b is a diagram of a working principle of a rectifier circuit in a negative half cycle with an uninterruptible power supply being in a mode of supplying power through utility power according to an embodiment of this application;
FIG. 8c is a diagram of a working principle of a charge/discharge circuit with an uninterruptible power supply being in a mode of supplying power through utility power according to an embodiment of this application;
FIG. 9a is a diagram of a working principle in which when an alternating current power supply is faulty, a charge/discharge circuit supplies power to a bus in an uninterruptible power supply according to an embodiment of this application;
FIG. 9b is a diagram of a working principle of an uninterruptible power supply in a mode of supplying power through an energy storage apparatus according to an embodiment of this application;
FIG. 9c is a diagram of another working principle of an uninterruptible power supply in a mode of supplying power through an energy storage apparatus according to an embodiment of this application; and
FIG. 9d is a diagram of a working principle of a charge/discharge circuit serving as a bus balanced circuit with an uninterruptible power supply being in a mode of supplying power through an energy storage apparatus according to an embodiment of this application.

### Reference numerals:

100: uninterruptible power supply; 200: alternating current power supply; 300: energy storage apparatus; 400: load; 11: switch circuit; 12: rectifier circuit; 13: inverter circuit; 14: charge/discharge circuit; 15: bus; T1: first switch; T2: second switch; T3: third switch; T4: fourth switch; Bat+: positive electrode; Bat-: negative electrode; N: neutral wire; +BUS: positive bus; -BUS: negative bus; D: diode; Q1, Q1a, Q1b, and Q1c: first switching transistors; Q2, Q2a, Q2b, and Q2c: second switching transistors; Q3, Q3a, Q3b, and Q3c: third switching transistors; L1, L1a, L1b, and L1c: first inductors; L2: second inductor; L3, L3a, L3b, and L3c: third inductors; C1: first bus capacitor; C2: second bus capacitor; C11: first capacitor; C12: second capacitor; Q4: fourth switching transistor; Q5: fifth switching transistor; Q6, Q6a, Q6b, and Q6c: sixth switching transistors; Q7, Q7a, Q7b, and Q7c: seventh switching transistors; Q8, Q8a, Q8b, and Q8c: eighth switching transistors; and Q9, Q9a, Q9b, and Q9c: ninth switching transistors.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

The terms such as "second" and "first" below are only for ease of description, and cannot be understood as indicating or implying relative importance or implicitly indicating a quantity of indicated technical features. Therefore, a feature limited by "second", "first", or the like may explicitly or implicitly include one or more features. In the descriptions of this application, unless otherwise stated, "a plurality of" means two or more than two.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts. They are used for description and clarification of relative positions, and may vary accordingly depending on a change in the orientations in which the components in the accompanying drawings are placed in the accompanying drawings.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact, or may be indirect contact through an intermediate medium.

In embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

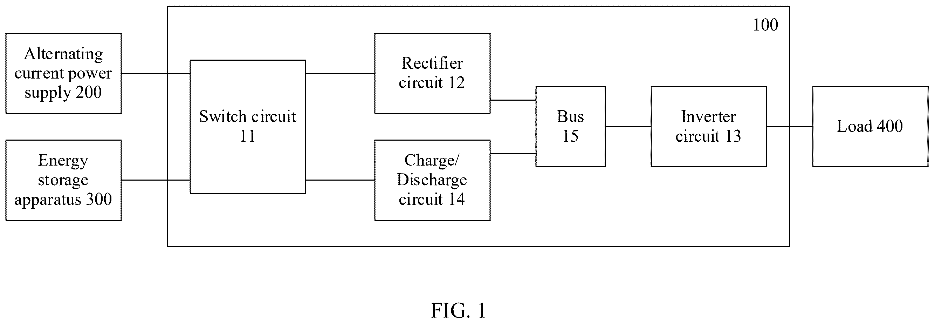

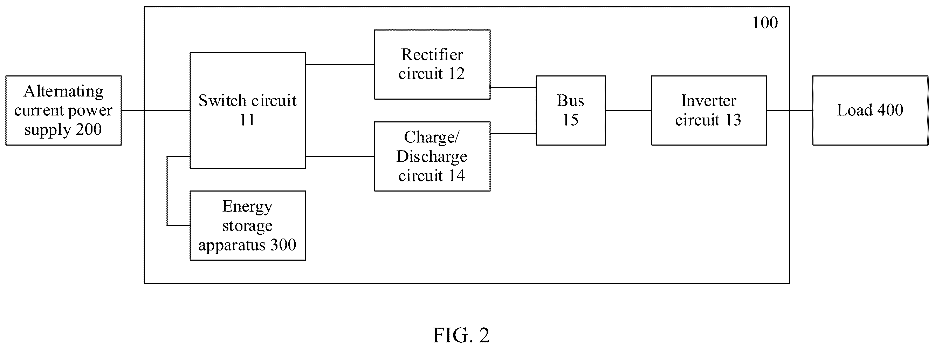

FIG. 1 illustrates a structure of an uninterruptible power supply according to an embodiment of this application. FIG. 2 illustrates another structure of an uninterruptible power supply according to an embodiment of this application.

Refer to FIG. 1. Embodiments of this disclosure provide an uninterruptible power supply 100, specifically including a utility power input, a switch circuit 11, a rectifier circuit 12, an inverter circuit 13, and a charge/discharge circuit 14. The utility power input is configured to connect to an alternating current power supply 200, a first input of the switch circuit 11 is configured to connect to the utility power input, and a second input of the switch circuit 11 is configured to connect to an energy storage apparatus 300. When being used in a small UPS, the energy storage apparatus 300 may be built in the UPS or may be built outside the UPS. Refer to FIG. 2. When being used in a medium or large-size UPS, the energy storage apparatus 300 has a large size, and is usually built outside the UPS. The energy storage apparatus 300 may be specifically a component, like a battery pack, which has a charge/discharge function. The first output of the switch circuit 11 is connected to an input of the rectifier circuit 12, and the second output of the switch circuit 11 is connected to a first end of the charge/discharge circuit 14. The switch circuit 11 is configured to control a connected/disconnected state between the alternating current power supply 200 and the rectifier circuit 12, a connected/disconnected state between the energy storage apparatus 300 and the charge/discharge circuit 14, and a connected/disconnected state between the energy storage apparatus 300 and the rectifier circuit 12. An output of the rectifier circuit 12 is connected to a bus 15, and the rectifier circuit 12 is configured to convert a received alternating current or electric energy of the energy storage apparatus 300 into a direct current and supply power to the bus 15. A second end of the charge/discharge circuit 14 is connected to the bus 15, and the charge/discharge circuit 14 is configured to supply power to the bus 15 or charge the energy storage apparatus 300 from the bus 15. An input of the inverter circuit 13 is connected to the bus 15, an output of the inverter circuit 13 is configured to connect to a load 400, and the inverter circuit 13 is configured to convert a direct current of the bus 15 into an alternating current and supply power to the load 400.

In embodiments of this application, the switch circuit 11, the rectifier circuit 12, the inverter circuit 13, and the charge/discharge circuit 14 may include components such as a switch T, a switching transistor Q, a diode D, an inductor L, and a capacitor C. Working statuses of the switch circuit 11, the rectifier circuit 12, the inverter circuit 13, and the charge/discharge circuit 14 may be implemented by adjusting working statuses of these components. Specifically, the working statuses of the foregoing components may be adjusted by using a controller, that is, the uninterruptible power supply 100 may further include the controller. The controller can control the connected/disconnected state of the switch circuit 11, control the rectifier circuit 12 to convert the received electric energy into a direct current and supply power to the bus 15, control the inverter circuit 13 to convert the direct current of the bus 15 into an alternating current, and control a charge/discharge state of the charge/discharge circuit 14. In a specific implementation, the controller may be any one of a microcontroller unit (microcontroller unit, MCU), a central processing unit (central processing unit, CPU), and a digital signal processor (digital signal processor, DSP). Certainly, a specific form of the controller is not limited to the foregoing examples.

When an alternating current input by the utility power input is normal, for example, the alternating current is determined to be normal by determining that voltage amplitude of the alternating current received at the utility power input is within a specified threshold range, the uninterruptible power supply 100 provided in embodiments of this application may be in a mode of supplying power through utility power, and the controller may control the switch circuit 11 to connect the alternating current power supply 200 and the rectifier circuit 12, connect the energy storage apparatus 300 and the charge/discharge circuit 14, and disconnect the energy storage apparatus 300 from the rectifier circuit 12. The controller may control the rectifier circuit 12 to convert the received alternating current into a direct current and supply power to the bus 15, control the inverter circuit 13 to convert the direct current of the bus 15 into an alternating current and supply power to the load 400, and control the charge/discharge circuit 14 to be in a charging state to charge the energy storage apparatus 300 from the bus 15.

When an alternating current input by the utility power input is faulty, which may be caused by interruption of the alternating current or an accident power failure, for example, the alternating current is determined to be faulty by determining that voltage amplitude of the alternating current received at the utility power input is beyond the specified threshold range, the uninterruptible power supply 100 provided in embodiments of this application is switched from the mode of supplying power through utility power to a mode of supplying power through the energy storage apparatus 300, and the controller may control the charge/discharge circuit 14 to quickly switch from a charging state to a discharging state, that is, control the charge/discharge circuit 14 to discharge the electric energy stored in the energy storage apparatus 300 to the bus 15 to quickly and reversely supply power to the bus 15. Because only switching transistors inside the charge/discharge circuit 14 is controlled and switched, this process is very quick, and switching may be completed within dozens of microseconds, to ensure that the direct current of the bus 15 is not powered off. After the controller controls the charge/discharge circuit 14 to supply power to the bus 15, the controller may control the switch circuit 11 to switch the connected state of the alternating current power supply 200 and the rectifier circuit 12 to the disconnected state, and then switch the disconnected state of the energy storage apparatus 300 and the rectifier circuit 12 to the connected state, so that the electric energy output by the energy storage apparatus 300 is input to the rectifier circuit 12, and the uninterruptible power supply 100 starts to work in the mode of supplying power through the energy storage apparatus 300. In addition, after the uninterruptible power supply 100 starts to work in the mode of supplying power through the energy storage apparatus 300, the controller may further control the switch circuit 11 to switch the connected state of the energy storage apparatus 300 and the charge/discharge circuit 14 to the disconnected state, to enable the charge/discharge circuit to 14 stop reversely supply power to the bus 15. The rectifier circuit 12 may perform power conversion on the electric energy received from the energy storage apparatus 300 and output the electric energy to the bus 15, and the inverter circuit 13 converts the electric energy of the bus 15 into an alternating current and outputs the alternating current to the load 400. The switch circuit 11 usually includes a plurality of switches, and the switch may be specifically implemented by using a relay. Based on a characteristic of the switch, a switching process requires several milliseconds to dozens of milliseconds, that is, it takes only several milliseconds to dozens of milliseconds for the charge/discharge circuit 14 to reversely supply power to the bus 15. Because time for the charge/discharge circuit 14 to reversely supply power to the bus 15 is short, the charge/discharge circuit 14 can work at a power that exceeds a rated power when reversely supplying power. For example, an actual discharge power of the charge/discharge circuit 14 is greater than twice a rated discharge power of the charge/discharge circuit 14. This can reduce a current specification of a circuit component, to reduce costs and a size.

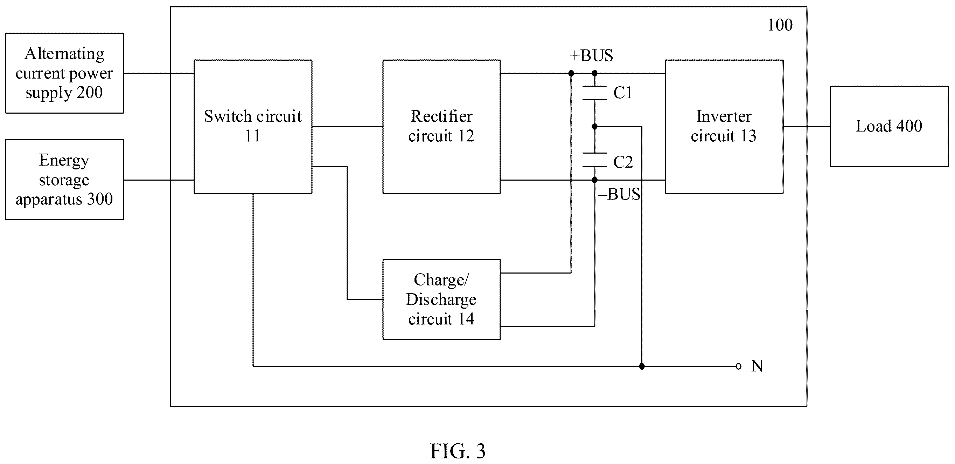

FIG. 3 illustrates another structure of an uninterruptible power supply according to an embodiment of this application.

Refer to FIG. 3. In some embodiments of this application, the bus 15 in the uninterruptible power supply 100 may specifically include a positive bus +BUS, a negative bus -BUS, a first bus capacitor C1, and a second bus capacitor C2. The first bus capacitor C1 and the second bus capacitor C2 are connected in series between the positive bus +BUS and the negative bus -BUS, and a midpoint of the first bus capacitor C1 and the second bus capacitor C2 is connected to a neutral wire N. The positive bus +BUS is configured to transmit a positive direct current, the negative bus -BUS is configured to transmit a negative direct current, the first bus capacitor C1 is configured to store electric energy of the positive bus +BUS, and the second bus capacitor C2 is configured to store electric energy of the negative bus -BUS. During actual use, the inverter circuit 13 converts the electric energy stored in the first bus capacitor C1 into a positive half-cycle signal of a second alternating current, and converts the electric energy stored in the second bus capacitor C2 into a negative half-cycle signal of the alternating current. A value of the electric energy stored in the first bus capacitor C1 is equal to a value of the electric energy stored in the second bus capacitor C2. When a power-consuming device, namely, the load 400, has different requirements for positive half-cycle electric energy and negative half-cycle electric energy of the alternating current, the electric energy stored in the first bus capacitor C1 and the electric energy stored in the second bus capacitor C2 cannot meet the requirements of the power-consuming device for electric energy. To ensure that the electric energy stored in the first bus capacitor C1 and the electric energy stored in the second bus capacitor C2 can meet the requirements of the power-consuming device, a balanced circuit needs to be disposed in the uninterruptible power supply 100. The balanced circuit can implement electric energy adjustment between the positive bus +BUS and the negative bus -BUS, so that adjusted electric energy of the positive bus +BUS and adjusted electric energy of the negative bus -BUS can meet the requirements of the power-consuming device for electric energy.

Refer to FIG. 3. In some embodiments of this application, a third output of the switch circuit 11 may be connected to the neutral wire N. After the uninterruptible power supply 100 starts to work in the mode of supplying power through the energy storage apparatus 300, the switch circuit 11 disconnects the energy storage apparatus 300 from the charge/discharge circuit 14, and connects the charge/discharge circuit 14 to the neutral wire N, so that the charge/discharge circuit 14 is used as a balanced circuit. In other words, the controller controls the switching transistor in the charge/discharge circuit 14 to be turned on, to enable a bus at a higher voltage in the positive bus +BUS and the negative bus -BUS to release the voltage to the neutral wire N. This balances a voltage difference between the positive bus and the negative bus, so that the uninterruptible power supply 100 works more stably when supplying power to the load 400 whose requirements for positive and negative electric energy are unbalanced.

When the alternating current input by the utility power input is restored, the uninterruptible power supply 100 provided in embodiments of this application is switched from the mode of supplying power through the energy storage apparatus 300 back to the mode of supplying power through utility power, the controller may control the switch circuit 11 to disconnect the charge/discharge circuit 14 from the neutral wire N, control the switch circuit 11 to connect the energy storage apparatus 300 and the charge/discharge circuit 14, and control the charge/discharge circuit 14 to discharge the electric energy stored in the energy storage apparatus 300 to the bus 15. The charge/discharge circuit 14 is configured to supply power to the bus 15 by using the energy storage apparatus 300, to ensure that the direct current of the bus 15 is not powered off in a process of switching to the mode of supplying power through utility power. After the charge/discharge circuit 14 supplies the electric energy stored in the energy storage apparatus 300 to the bus 15, the controller may control the switch circuit 11 to switch the connected state of the energy storage apparatus 300 and the rectifier circuit 12 to the disconnected state, and then switch the disconnected state of the alternating current power supply 200 and the rectifier circuit 12 to the connected state, so that the uninterruptible power supply 100 starts to work in the mode of supplying power through utility power. When the uninterruptible power supply 100 starts to work in the mode of supplying power through utility power, the controller may control the rectifier circuit 12 to convert the alternating current into a direct current and output the alternating current to the bus 15, control the inverter circuit 13 to convert the direct current of the bus 15 into an alternating current and output the alternating current to the load 400, and control the charge/discharge circuit 14 to charge the energy storage apparatus 300 with electric energy of the bus 15.

In embodiments of this application, in both the mode of supplying power through utility power and the mode of supplying power through the energy storage apparatus 300, the rectifier circuit 12 is in the working status. In other words, in the mode of supplying power through utility power and the mode of supplying power through the energy storage apparatus 300, the rectifier circuit 12 shares a topology, to reduce a size and costs of the circuit. The charge/discharge circuit 14 can be used as a charge circuit, a discharge circuit, and a bus balanced circuit. A topology of the charge/discharge circuit 14 is fully utilized, to reduce a size and costs of the circuit. In addition, the charge/discharge circuit 14 supplies power to the bus 15 for a short time, to support the switch circuit 11 in supplying energy to the bus 15 in a process of switching between the mode of supplying power through utility power and the mode of supplying power through the energy storage apparatus 300, so that the power that is reversely supplied by the charge/discharge circuit 14 can be applied at a power that exceeds a rated power. For example, an actual discharge power of the charge/discharge circuit 14 is greater than twice the rated discharge power of the charge/discharge circuit 14, to reduce current specifications of a circuit component. This reduces costs and a size. In addition, in the mode of supplying power through the energy storage apparatus 300, the charge/discharge circuit 14 can be reused as the bus balanced circuit through switching of the switch circuit 11. Reusing the circuit can reduce the size and the costs of the circuit.

The following describes specific structures of the switch circuit 11, the rectifier circuit 12, the charge/discharge circuit 14, and the inverter circuit 13 in the uninterruptible power supply 100.

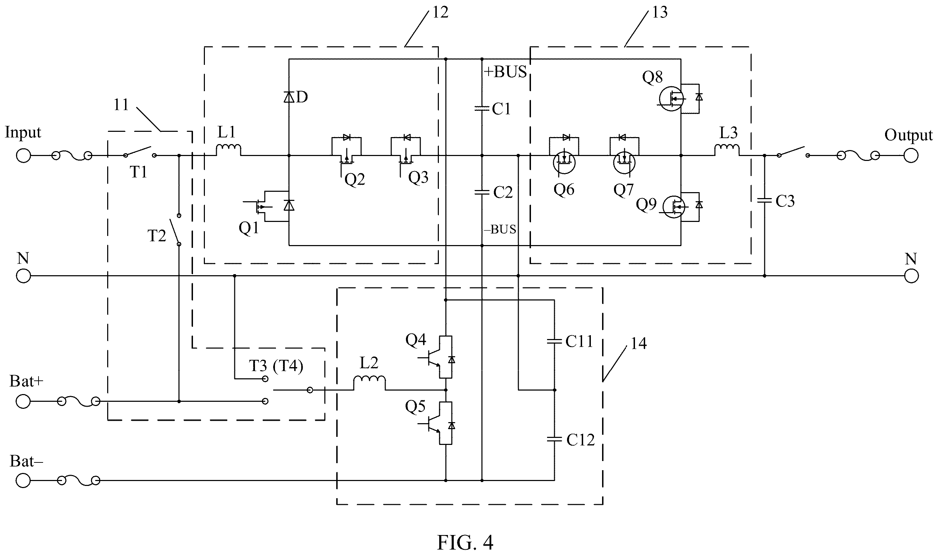

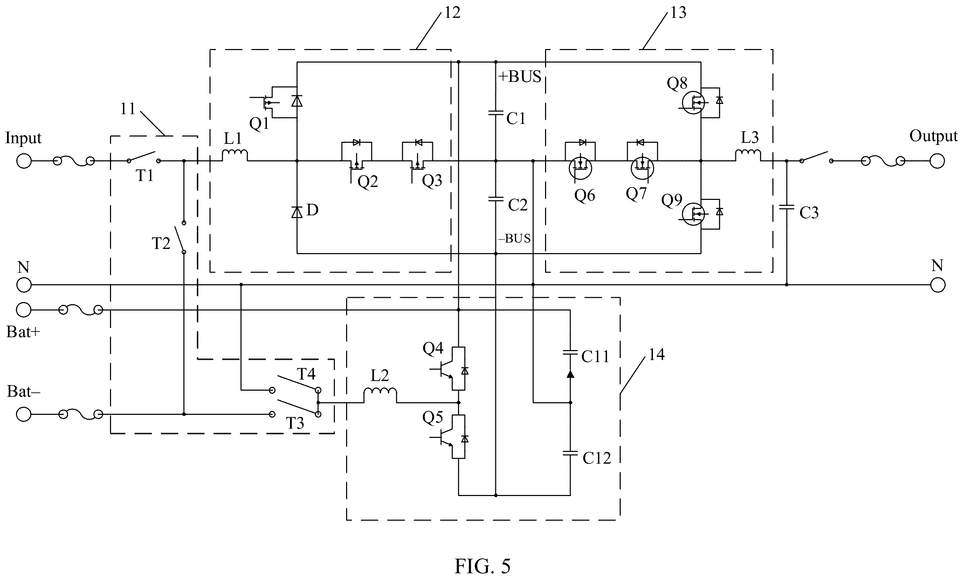

FIG. 4 illustrates a specific circuit structure of an uninterruptible power supply according to an embodiment of this application. FIG. 5 illustrates another specific circuit structure of an uninterruptible power supply according to an embodiment of this application.

Refer to FIG. 4 and FIG. 5. In some embodiments of this application, the alternating current power supply 200 connected to the uninterruptible power supply 100 may output a single-phase alternating current. The switch circuit 11 may specifically include a first switch T1, a second switch T2, and a third switch T3. A first end of the first switch T1 is connected to the utility power input Input of the single-phase alternating current, a second end of the first switch T1 is connected to an input of the rectifier circuit 12, and the first switch T1 may control a connected/disconnected state between the utility power input Input and the rectifier circuit 12. Optionally, a fuse may be further disposed between the utility power input Input and the first end of the first switch T1. A first end of the second switch T2 is configured to connect to the energy storage apparatus 300, a second end of the second switch T2 is connected to the input of the rectifier circuit 12, and the second switch T2 may control the connected/disconnected state between the energy storage apparatus 300 and the rectifier circuit 12. A first end of the third switch T3 is configured to connect to the energy storage apparatus 300, a second end of the third switch T3 is connected to a first end of the charge/discharge circuit 14, and the third switch T3 can control the connected/disconnected state between the charge/discharge circuit 14 and the energy storage apparatus 300.

Specifically, refer to FIG. 4. In some embodiments of this application, the first end of the second switch T2 may be connected to a positive electrode Bat+ of the energy storage apparatus 300, and correspondingly, a negative electrode Bat- of the energy storage apparatus 300 is connected to the negative bus -BUS in the bus 15, so that the second switch T2 can control the connected/disconnected state between the positive electrode Bat+ of the energy storage apparatus 300 and the rectifier circuit 12. The first end of the third switch T3 may be connected to the positive electrode Bat+ of the energy storage apparatus 300, so that the third switch T3 can control the connected/disconnected state between the charge/discharge circuit 14 and the positive electrode Bat+ of the energy storage apparatus 300.

Alternatively, refer to FIG. 5. In some other embodiments of this application, the first end of the second switch T2 may be connected to the negative electrode Bat- of the energy storage apparatus 300, and correspondingly, the positive electrode Bat+ of the energy storage apparatus 300 is connected to the positive bus +BUS in the bus 15, so that the second switch T2 can control the connected/disconnected state between the negative electrode Bat- of the energy storage apparatus 300 and the rectifier circuit 12. The first end of the third switch T3 may be connected to the negative electrode Bat- of the energy storage apparatus 300, so that the third switch T3 can control the connected/disconnected state between the charge/discharge circuit 14 and the negative electrode Bat- of the energy storage apparatus 300.

Refer to FIG. 4 and FIG. 5. In some embodiments of this application, the switch circuit 11 may further include a fourth switch T4, a first end of the fourth switch T4 is configured to connect to the neutral wire N, and a second end of the fourth switch T4 is connected to the first end of the charge/discharge circuit 14. The fourth switch T4 can control a connected/disconnected state between the charge/discharge circuit 14 and the neutral wire N. When the alternating current input by the utility power input Input is faulty, the controller may control the third switch T3 to be turned off, and control the fourth switch T4 to be turned on, so that the charge/discharge circuit 14 is used as a balanced circuit. In other words, the controller controls the charge/discharge circuit 14 to balance a voltage difference between the positive bus +BUS and the negative bus -BUS, so that the uninterruptible power supply 100 works more stably when supplying power to the load 400 whose requirements for positive and negative electric energy are unbalanced.

Refer to FIG. 4. In some embodiments of this application, the third switch T3 and the fourth switch T4 may form a single-pole double-throw switch. Alternatively, refer to FIG. 5. In some other embodiments of this application, the third switch T3 and the fourth switch T4 may be two separate single-pole single-throw switches. This is not limited herein.

Refer to FIG. 4 and FIG. 5. In some other embodiments of this application, the rectifier circuit 12 may specifically include a first inductor L1, a first switching transistor Q1, a second switching transistor Q2, a third switching transistor Q3, and a diode D. The first end of the first inductor L1 is connected to the first output of the switch circuit 11, that is, the first end of the first inductor L1 is connected to the second end of the first switch T1 and the second end of the second switch T2, and a second end of the first inductor L1 is connected to a first electrode of the second switching transistor Q2. A second electrode of the second switching transistor Q2 is connected to a second electrode of the third switching transistor Q3, and a first electrode of the third switching transistor Q3 is connected to the neutral wire N. Refer to FIG. 4. When the first end of the second switch T2 and the first end of the third switch T3 of the switch circuit 11 are both connected to the positive electrode Bat+ of the energy storage apparatus 300, a first electrode of the first switching transistor Q1 is connected to the negative bus -BUS, and a second electrode of the first switching transistor Q1 is connected to the second end of the first inductor L1. A positive electrode of the diode D is connected to the second end of the first inductor L1, and a negative electrode of the diode D is connected to the positive bus +BUS. Refer to FIG. 5. When the first end of the second switch T2 and the first end of the third switch T3 of the switch circuit 11 are both connected to the negative electrode Bat- of the energy storage apparatus 300, the first electrode of the first switching transistor Q1 is connected to the second end of the first inductor L1, and the second electrode of the first switching transistor Q1 is connected to the positive bus +BUS. The positive electrode of the diode D is connected to the negative bus -BUS, and the negative electrode of the diode D is connected to the second end of the first inductor L1. Specifically, when a potential of the positive electrode is higher than a potential of the negative electrode of the diode D, the diode D is turned on and can transmit a current. When the potential of the positive electrode is lower than the potential of the negative electrode of the diode D, the diode D is turned off and cannot transmit a current. The rectifier circuit 12 may work in a half-bridge mode.

Refer to FIG. 4 and FIG. 5. In some embodiments of this application, the charge/discharge circuit 14 may include a second inductor L2, a fourth switching transistor Q4, a fifth switching transistor Q5, a first capacitor C11, and a second capacitor C12. A first end of the second inductor L2 is connected to the second output of the switch circuit 11, that is, the first end of the second inductor L2 is connected to the second end of the third switch T3, and a second end of the second inductor L2 is connected to a first end of the fourth switching transistor Q4 and a second end of the fifth switching transistor Q5. The fourth switching transistor Q4, the fifth switching transistor Q5, the first capacitor C11, and the second capacitor C12 may form a low-power charge/discharge circuit 14 of a half-bridge topology. A power of the low-power charge/discharge circuit 14 is approximately 30% of a power of a full-power charge/discharge circuit 14. However, the low-power charge/discharge circuit 14 may achieve effect of the full-power charge/discharge circuit 14 by working for a short time at a power that exceeds a rated power. In comparison with the full-power charge/discharge circuit 14, costs and a size of the low-power charge/discharge circuit 14 may be reduced. Specifically, a second end of the fourth switching transistor Q4 is connected to the positive bus +BUS, and a first end of the fifth switching transistor Q5 is connected to the negative bus -BUS. The first capacitor C11 is connected between the positive bus +BUS and the neutral wire N, that is, the first capacitor C11 and the first bus 15 capacitor are disposed in parallel. The second capacitor C12 is connected between the negative bus -BUS and the neutral wire N, that is, the second capacitor C12 and the second bus 15 capacitor are disposed in parallel. When the charge/discharge circuit 14 is used as a balanced circuit, the controller may control the fourth switching transistor Q4 to be turned on and control the fifth switching transistor Q5 to be turned off when determining that the voltage of the positive bus +BUS is greater than the voltage of the negative bus -BUS, so that the voltage of the positive bus +BUS is released to the neutral wire N. When determining that the voltage of the negative bus -BUS is greater than the voltage of the positive bus +BUS, the controller may control the fifth switching transistor Q5 to be turned on and control the fourth switching transistor Q4 to be turned off, so that the voltage of the negative bus -BUS is released to the neutral wire N.

In embodiments of this application, the inverter circuit 13 may use a two-level half-bridge topology, a T-type or I-type three-level half-bridge topology, or another topology. Refer to FIG. 4 and FIG. 5. For example, the inverter circuit 13 uses a T-type three-level topology. The inverter circuit 13 may include a third inductor L3, a sixth switching transistor Q6, a seventh switching transistor Q7, an eighth switching transistor Q8, and a ninth switching transistor Q9. A first end of the sixth switching transistor Q6 is connected to the neutral wire N, and a second end of the sixth switching transistor Q6 is connected to a second end of the seventh switching transistor Q7. A first end of the third inductor L3 is connected to a first end of the seventh switching transistor Q7, and a second end of the third inductor L3 is connected to an output Output used to supply power to the load 400. Optionally, components such as a fuse and a switch may be further disposed between the output Output and the second end of the third inductor L3. A first end of the eighth switching transistor Q8 is connected to the first end of the third inductor L3, and a second end of the eighth switching transistor Q8 is connected to the positive bus +BUS. A first end of the ninth switching transistor Q9 is connected to the negative bus -BUS, and a second end of the ninth switching transistor Q9 is connected to the first end of the third inductor L3.

The switching transistor in the rectifier circuit 12, the inverter circuit 13, and the charge/discharge circuit 14 provided in embodiments of this application may include a diode and a transistor that are connected in parallel. Specifically, the switching transistor may be a metal-oxide-semiconductor field-effect transistor (metal-oxide-semiconductor field-effect transistor, MOSFET), and the MOSFET naturally has a reverse diode function. Alternatively, the switching transistor may be an insulated-gate bipolar transistor (insulated-gate bipolar transistor, IGBT) or a bipolar junction transistor (bipolar junction transistor, BJT) with a built-in diode. Alternatively, the switching transistor may be an independent diode that is connected in parallel to a gallium nitride (GaN) field-effect transistor, a silicon carbide (SiC) power transistor, or one or more of a plurality of transistor components. Types of switching transistors are not enumerated in embodiments of this application.

Specifically, each switching transistor may include a first electrode, a second electrode, and a control electrode. The control electrode is configured to control the switching transistor to be turned on or turned off. When the switching transistor is turned on, a current may be transmitted between the first electrode and the second electrode of the switching transistor. When the switching transistor is turned off, a current cannot be transmitted between the first electrode and the second electrode of the switching transistor. The MOSFET is used as an example. The control electrode of the switching transistor is a gate, the first electrode of the switching transistor may be a source of the switching transistor, and the second electrode may be a drain of the switching transistor. Alternatively, the first electrode may be a drain of the switching transistor, and the second electrode may be a source of the switching transistor.

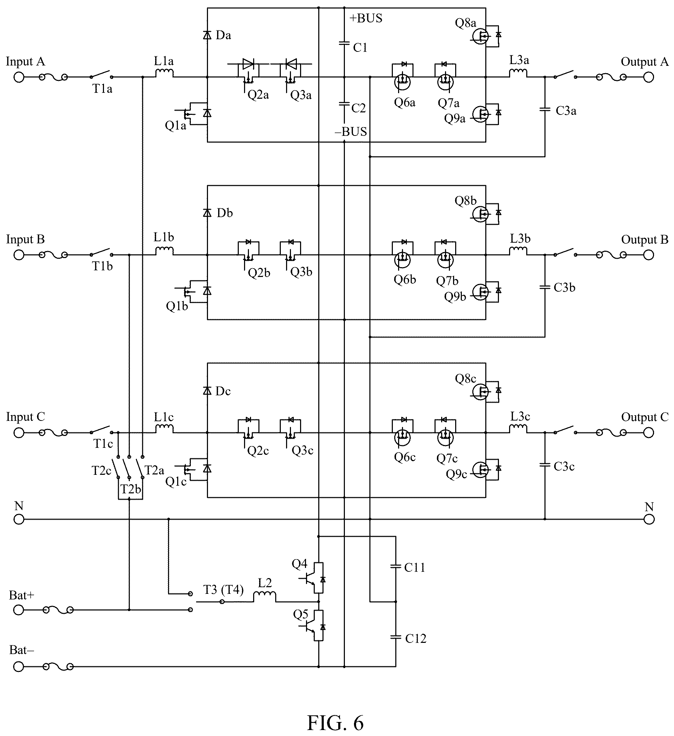

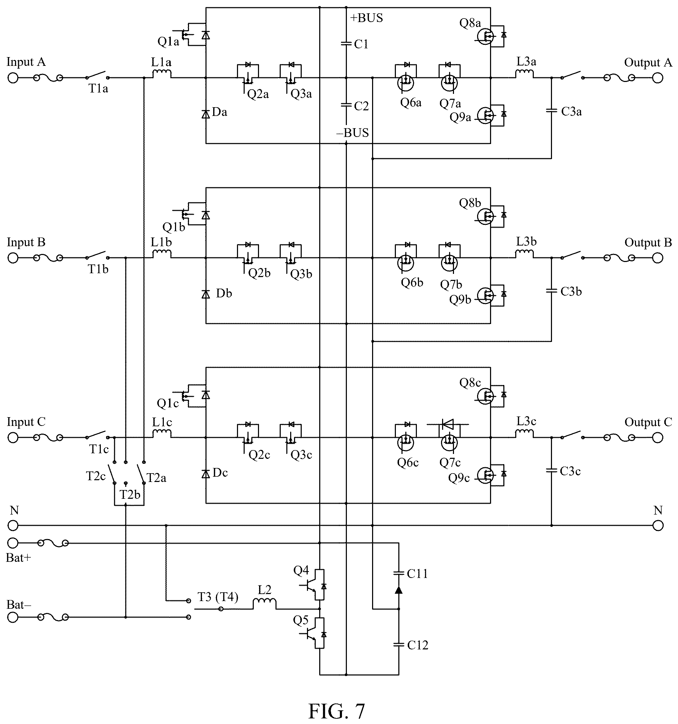

FIG. 6 illustrates another specific circuit structure of an uninterruptible power supply according to an embodiment of this application. FIG. 7 illustrates another specific circuit structure of an uninterruptible power supply according to an embodiment of this application.

Refer to FIG. 6 and FIG. 7. In some other embodiments of this application, an alternating current is connected to the uninterruptible power supply, and a three-phase alternating current may also be output, for example, a phase A, a phase B, and a phase C. Correspondingly, the uninterruptible power supply may include three rectifier circuits and three inverter circuits that correspond to phases (namely, the phase A, the phase B, and the phase C) of alternating currents of the three-phase alternating current. Each rectifier circuit is configured to convert the received electric energy of the energy storage apparatus or a corresponding phase (namely, the phase A, the phase B, or the phase C) of alternating current into a direct current, and output the direct current to the bus. Each inverter circuit is configured to convert the direct current of the bus into an alternating current and supply power to the load. A rectifier circuit corresponding to the phase-A alternating current may include a first inductor L1a, a first switching transistor Q1a, a second switching transistor Q2a, a third switching transistor Q3a, and a diode Da. A rectifier circuit corresponding to the phase-B alternating current may include a first inductor L1b, a first switching transistor Q1b, a second switching transistor Q2b, a third switching transistor Q3b, and a diode Db. A rectifier circuit corresponding to the phase-C alternating current may include a first inductor L1c, a first switching transistor Q1c, a second switching transistor Q2c, a third switching transistor Q3c, and a diode Dc. An inverter circuit corresponding to the phase-A alternating current may include a third inductor L3a, a sixth switching transistor Q6a, a seventh switching transistor Q7a, an eighth switching transistor Q8a, and a ninth switching transistor Q9a. An inverter circuit corresponding to the phase-B alternating current may include a third inductor L3b, a sixth switching transistor Q6b, a seventh switching transistor Q7b, an eighth switching transistor Q8b, and a ninth switching transistor Q9b. An inverter circuit corresponding to the phase-C alternating current may include a third inductor L3c, a sixth switching transistor Q6c, a seventh switching transistor Q7c, an eighth switching transistor Q8c, and a ninth switching transistor Q9c. For topology structures of each rectifier circuit and each inverter circuit, refer to the topology structure of a single-phase alternating current. Details are not described herein.

Correspondingly, the switch circuit may include three first switches T1a, T1b, and T1c and three second switches T2a, T2b, and T2c that correspond to the phases (namely, the phase A, the phase B, and the phase C) of alternating currents of the three-phase alternating current. A first end of the first switch T1a is configured to receive the phase-A alternating current, and a second end of the first switch T1a is connected to an input of the rectifier circuit corresponding to the phase-A alternating current. A second end of the second switch T2a is connected to the input of the rectifier circuit corresponding to the phase-A alternating current. A first end of the first switch T1b is configured to receive the phase-B alternating current, and a second end of the first switch T1b is connected to an input of the rectifier circuit corresponding to the phase-B alternating current. A second end of the second switch T2b is connected to the input of the rectifier circuit corresponding to the phase-B alternating current. A first end of the first switch T1c is configured to receive the phase-C alternating current, and a second end of the first switch T1c is connected to an input of the rectifier circuit corresponding to the phase-C alternating current. A second end of the second switch T2c is connected to the input of the rectifier circuit corresponding to the phase-C alternating current.

The following uses the uninterruptible power supply 100 shown in FIG. 4 as an example to describe working time sequences of the uninterruptible power supply 100 provided in embodiments of this application in different modes and working time sequences of controlling performed by the controller during mode switching.

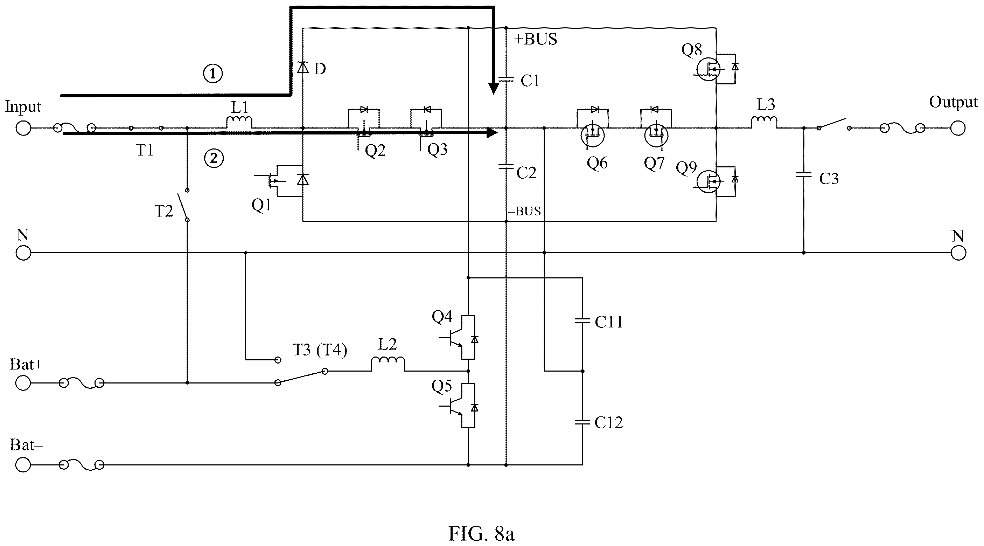

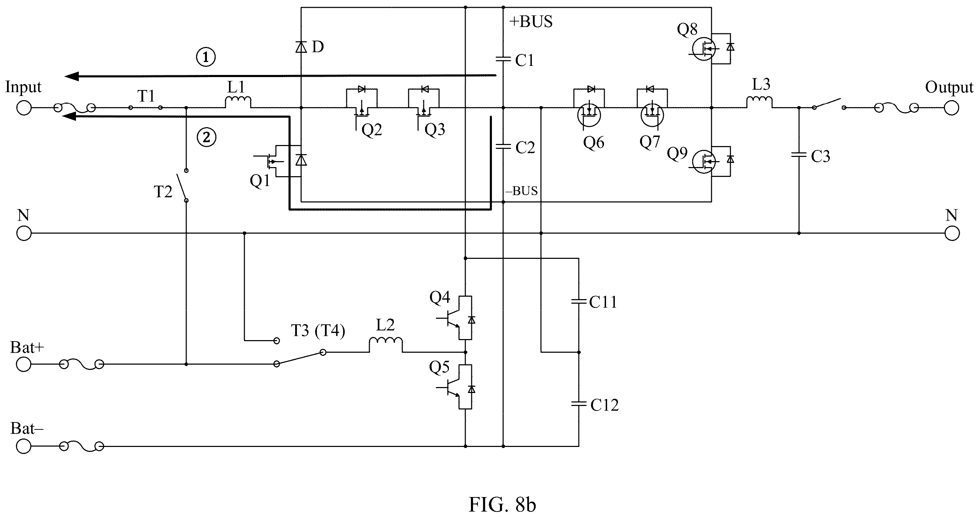

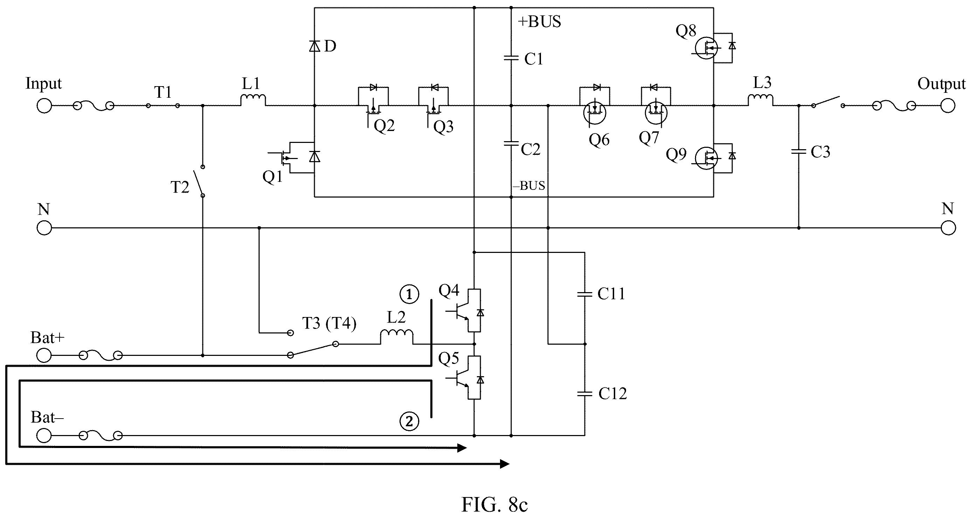

FIG. 8a illustrates a working principle of a rectifier circuit in a positive half cycle with an uninterruptible power supply being in a mode of supplying power through utility power according to an embodiment of this application. FIG. 8b illustrates a working principle of a rectifier circuit in a negative half cycle with an uninterruptible power supply being in a mode of supplying power through utility power according to an embodiment of this application. FIG. 8c illustrates a working principle of a charge/discharge circuit with an uninterruptible power supply being in a mode of supplying power through utility power according to an embodiment of this application.

When the alternating current power supply 200 works normally, the uninterruptible power supply 100 is in the mode of supplying power through utility power. Refer to FIG. 8a to FIG. 8c. The first switch T1 controls the alternating current power supply 200 to connect to the rectifier circuit 12, the third switch T3 controls the positive electrode of the energy storage apparatus 300 to connect to the charge/discharge circuit 14, and the second switch T2 controls the positive electrode of the energy storage apparatus 300 to disconnect from the rectifier circuit 12. Refer to FIG. 8a. In a positive half cycle of an alternating current, the second switching transistor Q2 is in an on state. When the third switching transistor Q3 is turned off, the current flows through a path ①. When the third switching transistor Q3 is turned on, the current flows through a path ②. Refer to FIG. 8b. In a negative half cycle of the alternating current, the third switching transistor Q3 is in an on state. When the second switching transistor Q2 is turned on, the current flows through a path ①. When the second switching transistor Q2 is turned off, the current flows through a path ②. Refer to FIG. 8c. When the fifth switching transistor Q5 is in an off state and the fourth switching transistor Q4 is turned on, the current flows through a path ① to charge the energy storage apparatus 300. When the fourth switching transistor Q4 is turned off, the current flows through a path ② to charge the energy storage apparatus 300.

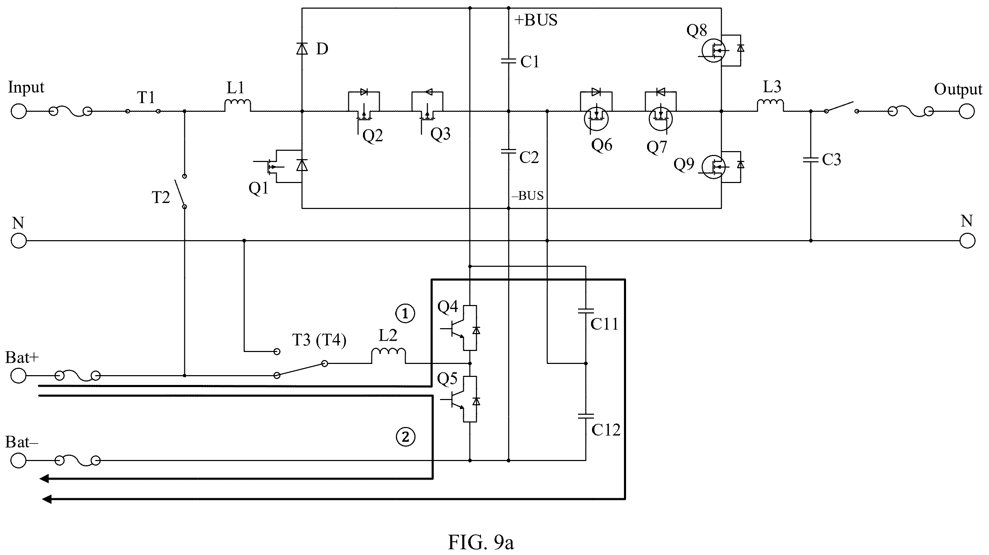

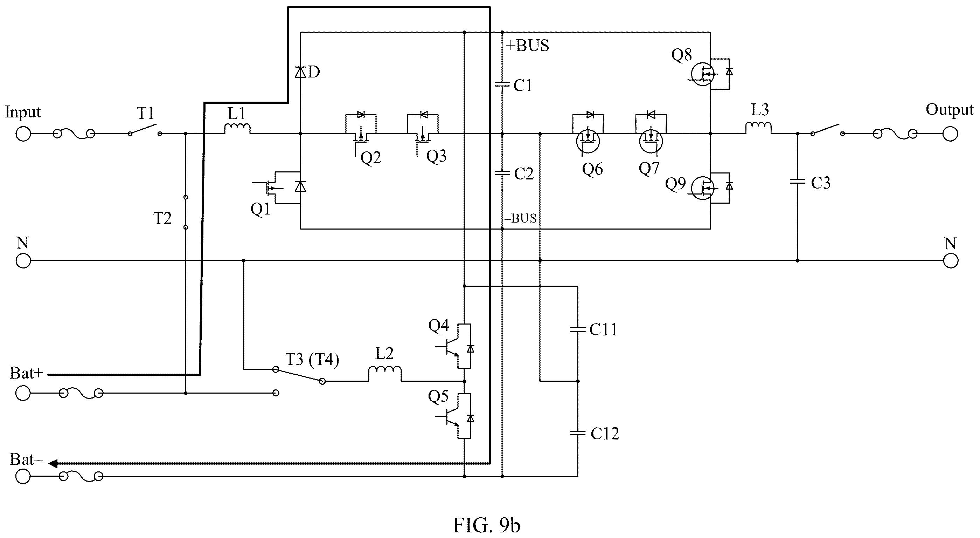

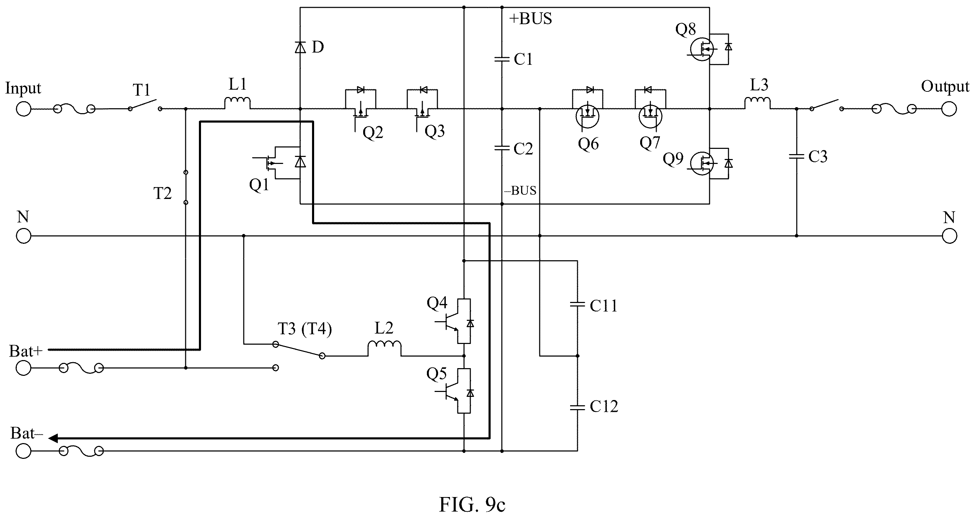

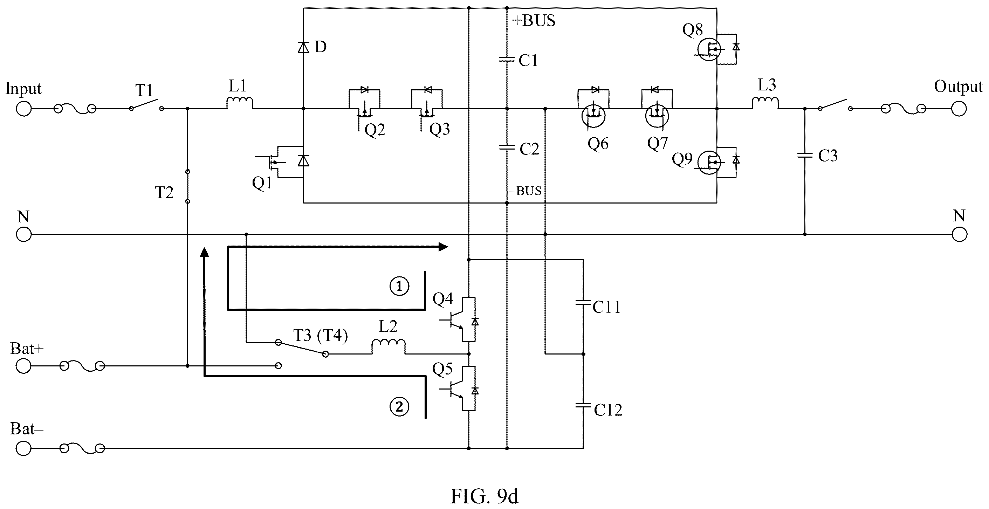

FIG. 9a illustrates a working principle in which when an alternating current power supply is faulty, a charge/discharge circuit supplies power to a bus in an uninterruptible power supply according to an embodiment of this application. FIG. 9b illustrates a working principle of an uninterruptible power supply in a mode of supplying power through an energy storage apparatus according to an embodiment of this application. FIG. 9c illustrates another working principle of an uninterruptible power supply in a mode of supplying power through an energy storage apparatus according to an embodiment of this application. FIG. 9d illustrates a working principle of a charge/discharge circuit serving as a bus balanced circuit with an uninterruptible power supply being in a mode of supplying power through an energy storage apparatus according to an embodiment of this application.

When the alternating current power supply 200 is faulty, the uninterruptible power supply 100 switches from the mode of supplying power through utility power to the mode of supplying power through the energy storage apparatus 300. Refer to FIG. 9a. The charge/discharge circuit 14 can quickly switch from a charging state to a discharging state, that is, discharge the electric energy stored in the energy storage apparatus 300 to the bus 15, to quickly and reversely supply power to the bus 15. Specifically, when the fourth switching transistor Q4 is in an off state, and the fifth switching transistor Q5 is turned off, the current flows through a path ① to discharge. When the fifth switching transistor Q5 is turned on, the current flows through a path ② to discharge. When the charge/discharge circuit 14 supplies power to the bus 15, the first switch T1 may switch the connected state of the alternating current power supply 200 and the rectifier circuit 12 to the disconnected state, and then the second switch T2 may switch the disconnected state of the energy storage apparatus 300 and the rectifier circuit 12 to the connected state, so that the uninterruptible power supply 100 starts to work in the mode of supplying power through the energy storage apparatus 300. In the mode of supplying power through the energy storage apparatus 300, when the first switching transistor Q1 is turned on, the current flows through a path shown by the arrow in FIG. 9b. When the first switching transistor Q1 is turned off, the current flows through a path shown in FIG. 9c. In the mode of supplying power through the energy storage apparatus 300, the fourth switch T4 can connect the neutral wire N and the charge/discharge circuit 14, so that the charge/discharge circuit 14 can be reused as a bus balanced circuit. Refer to FIG. 9d. The working principle of the bus balanced circuit is as follows: When the fourth switching transistor Q4 is turned on, and the fifth switching transistor Q5 is turned off, the current flows through a path ①. When the fourth switching transistor Q4 is turned off, and the fifth switching transistor Q5 is turned on, the current flows through a path ②.

When the alternating current power supply 200 is restored, the uninterruptible power supply 100 switches from the mode of supplying power through the energy storage apparatus 300 to the mode of supplying power through utility power. Refer to FIG. 9a. The third switch T3 and the fourth switch T4 switch from connecting the neutral wire N and the charge/discharge circuit 14 to connecting the positive electrode of the energy storage apparatus 300 and the charge/discharge circuit 14. The charge/discharge circuit 14 can quickly switch to a discharging state, that is, discharge the electric energy stored in the energy storage apparatus 300 to the bus 15, to quickly and reversely supply power to the bus 15. When the charge/discharge circuit 14 supplies power to the bus 15, the second switch T2 may switch the connected state of the energy storage apparatus 300 and the rectifier circuit 12 to the disconnected state, and then the first switch T1 may switch the disconnected state of the alternating current power supply 200 and the rectifier circuit 12 to the connected state, so that the uninterruptible power supply 100 starts to work in the mode of supplying power through utility power. For a working principle in which the rectifier circuit 12 supplies power to the bus 15 via the alternating current, refer to FIG. 8a and FIG. 8b. For a working principle in which the charge/discharge circuit 14 charges the energy storage apparatus 300, refer to FIG. 8c.

Based on a same invention concept, an embodiment of this application further provides a power supply system, including the uninterruptible power supply and the energy storage apparatus provided in embodiments of this application. The energy storage apparatus may be connected to a first end of a second switch in the uninterruptible power supply. Specifically, the power supply system is connected between an alternating current power supply and a power-consuming device, and the power supply system is configured to supply power to the power-consuming device via an alternating current output by the alternating current power supply. When being used in a small power supply system, the energy storage apparatus may be built in the UPS or may be built outside the UPS. When being used in a medium or large-size power supply system, the energy storage apparatus has a large size, and is usually built outside the UPS. A principle in which the power supply system resolves problems is similar to that of the uninterruptible power supply. Therefore, for implementation of the power supply system, refer to implementation of the uninterruptible power supply. Repeated parts are not described again.

It is clear that a person skilled in the art can make various modifications and variations to this application without departing from the scope of this application. If these modifications and variations made to this application fall within the scope of the claims of this application and equivalent technologies thereof, this application is also intended to cover these modifications and variations.

## Claims

1. An uninterruptible power supply, comprising a utility power input, a switch circuit, a rectifier circuit, an inverter circuit, and a charge/discharge circuit;
the switch circuit comprises a first switch, a second switch, and a third switch, a first end of the first switch is connected to the utility power input, a second end of the first switch is connected to an input of the rectifier circuit, a first end of the second switch is configured to connect to an energy storage apparatus, a second end of the second switch is connected to the input of the rectifier circuit, a first end of the third switch is configured to connect to the energy storage apparatus, and a second end of the third switch is connected to a first end of the charge/discharge circuit;
an output of the rectifier circuit is configured to connect to a bus, an input of the inverter circuit is configured to connect to the bus, and a second end of the charge/discharge circuit is configured to connect to the bus; and
the uninterruptible power supply further comprises a controller, and the controller is configured to:
in response to an alternating current input by the utility power input being normal, control the first switch to be turned on, control the second switch to be turned off, control the third switch to be turned on, control the rectifier circuit to convert the alternating current input by the utility power input into a direct current, control the inverter circuit to convert the direct current into an alternating current and supply the alternating current to a load, and control the charge/discharge circuit to charge the energy storage apparatus; and
in response to the alternating current input by the utility power input being faulty, control the charge/discharge circuit to discharge electric energy stored in the energy storage apparatus to the bus; and after the charge/discharge circuit discharges the electric energy stored in the energy storage apparatus to the bus, control the first switch to be turned off, control the second switch to be turned on, and control the third switch to be turned off, to enable the electric energy output by the energy storage apparatus to be input to the rectifier circuit, wherein the rectifier circuit is further configured to perform power conversion on the electric energy input by the energy storage apparatus and output the electric energy to the bus.

2. The uninterruptible power supply according to claim 1, wherein the bus comprises a positive bus and a negative bus, the switch circuit further comprises a fourth switch, a first end of the fourth switch is configured to connect to a neutral wire, and a second end of the fourth switch is connected to the first end of the charge/discharge circuit; and
the controller is further configured to:
in response to the alternating current input by the utility power input being faulty, control the third switch to be turned off, control the fourth switch to be turned on, and control a switching transistor in the charge/discharge circuit to be turned on, to enable a bus at a higher voltage in the positive bus and the negative bus to release the voltage to the neutral wire.

3. The uninterruptible power supply according to claim 2, wherein the third switch and the fourth switch form a single-pole double-throw switch.

4. The uninterruptible power supply according to claim 2 or 3, wherein the controller is further configured to:
in response to the alternating current input by the utility power input being restored, control the fourth switch to be turned off, control the third switch to be turned on, and control the charge/discharge circuit to discharge the electric energy stored in the energy storage apparatus to the bus; and after the charge/discharge circuit discharges the electric energy stored in the energy storage apparatus to the bus, control the second switch to be turned off, control the first switch to be turned on, to enable the rectifier circuit to convert the alternating current input by the utility power input into a direct current and supply power to the bus, and control the charge/discharge circuit to charge the energy storage apparatus.

5. The uninterruptible power supply according to claim 4, wherein when the charge/discharge circuit discharges the electric energy stored in the energy storage apparatus to the bus, an actual discharge power of the charge/discharge circuit is greater than twice a rated discharge power of the charge/discharge circuit.

6. The uninterruptible power supply according to any one of claims 1 to 5, wherein the first end of the second switch and the first end of the third switch are both configured to connect to a positive electrode of the energy storage apparatus, and a negative electrode of the energy storage apparatus is connected to the negative bus in the bus; and
the rectifier circuit comprises a first inductor, a first switching transistor, a second switching transistor, a third switching transistor, and a diode, wherein
a first end of the first inductor is separately connected to the second end of the first switch and the second end of the second switch, and a second end of the first inductor is separately connected to a second electrode of the first switching transistor, a positive electrode of the diode, and a first electrode of the second switching transistor;
a first electrode of the first switching transistor is connected to the negative bus, and a negative electrode of the diode is connected to the positive bus in the bus; and
a second electrode of the second switching transistor is connected to a second electrode of the third switching transistor, and a first electrode of the third switching transistor is connected to the neutral wire.

7. The uninterruptible power supply according to any one of claims 1 to 5, wherein the first end of the second switch and the first end of the third switch are both configured to connect to a negative electrode of the energy storage apparatus, and a positive electrode of the energy storage apparatus is connected to the positive bus in the bus; and
the rectifier circuit comprises a first inductor, a first switching transistor, a second switching transistor, a third switching transistor, and a diode, wherein
a first end of the first inductor is separately connected to the second end of the first switch and the second end of the second switch, and a second end of the first inductor is separately connected to a first electrode of the first switching transistor, a negative electrode of the diode, and a first electrode of the second switching transistor;
a second electrode of the first switching transistor is connected to the positive bus, and a positive electrode of the diode is connected to the negative bus in the bus; and
a second electrode of the second switching transistor is connected to a second electrode of the third switching transistor, and a first electrode of the third switching transistor is connected to the neutral wire.

8. The uninterruptible power supply according to any one of claims 1 to 7, wherein the charge/discharge circuit comprises a second inductor, a fourth switching transistor, a fifth switching transistor, a first capacitor, and a second capacitor;
a first end of the second inductor is connected to the second end of the third switch, and a second end of the second inductor is separately connected to a first end of the fourth switching transistor and a second end of the fifth switching transistor;
a second end of the fourth switching transistor is connected to the positive bus in the bus, and a first end of the fifth switching transistor is connected to the negative bus in the bus; and
the first capacitor is connected between the positive bus and the neutral wire, and the second capacitor is connected between the negative bus and the neutral wire.

9. The uninterruptible power supply according to claim 2, wherein the charge/discharge circuit comprises a second inductor, a fourth switching transistor, a fifth switching transistor, a first capacitor, and a second capacitor;
a first end of the second inductor is connected to the second end of the third switch, and a second end of the second inductor is separately connected to a first end of the fourth switching transistor and a second end of the fifth switching transistor;
a second end of the fourth switching transistor is connected to the positive bus in the bus, and a first end of the fifth switching transistor is connected to the negative bus in the bus;
the first capacitor is connected between the positive bus and the neutral wire, and the second capacitor is connected between the negative bus and the neutral wire; and
in response to a voltage of the positive bus being higher than a voltage of the negative bus, the controller is configured to control the fourth switching transistor in the charge/discharge circuit to be turned on and control the fifth switching transistor to be turned off; or
in response to a voltage of the negative bus being higher than a voltage of the positive bus, the controller is configured to control the fifth switching transistor in the charge/discharge circuit to be turned on and control the fourth switching transistor to be turned off.

10. The uninterruptible power supply according to any one of claims 1 to 9, wherein if the utility power input inputs a three-phase alternating current, the uninterruptible power supply comprises three rectifier circuits and three inverters that correspond to phases of alternating currents of the three-phase alternating current; and the switch circuit comprises three first switches and three second switches that correspond to the phases of alternating currents of the three-phase alternating current;
a first end of each first switch is configured to receive a corresponding phase of alternating current, a second end of each first switch is connected to an input of the rectifier circuit corresponding to a same phase of alternating current, and a second end of each second switch is connected to an input of the rectifier circuit corresponding to a same phase of alternating current; and
each rectifier circuit is configured to convert the received electric energy of the energy storage apparatus or a corresponding phase of alternating current into a direct current, and output the direct current to the bus.

11. A power supply system, wherein the power supply system comprises an energy storage apparatus and an uninterruptible power supply, and the uninterruptible power supply comprises a utility power input, a switch circuit, a rectifier circuit, an inverter circuit, and a charge/discharge circuit;
the switch circuit comprises a first switch, a second switch, and a third switch, a first end of the first switch is connected to the utility power input, a second end of the first switch is connected to an input of the rectifier circuit, a first end of the second switch is connected to the energy storage apparatus, a second end of the second switch is connected to the input of the rectifier circuit, a first end of the third switch is connected to the energy storage apparatus, and a second end of the third switch is connected to a first end of the charge/discharge circuit;
an output of the rectifier circuit is configured to connect to a bus, an input of the inverter circuit is configured to connect to the bus, and a second end of the charge/discharge circuit is configured to connect to the bus; and
the uninterruptible power supply further comprises a controller, and the controller is configured to:
in response to the alternating current input by the utility power input being normal, control the first switch to be turned on, control the second switch to be turned off, control the third switch to be turned on, control the rectifier circuit to convert the alternating current input by the utility power input into a direct current, control the inverter circuit to convert the direct current into an alternating current and supply the alternating current to a load, and control the charge/discharge circuit to charge the energy storage apparatus; and
in response to the alternating current input by the utility power input being faulty, control the charge/discharge circuit to discharge electric energy stored in the energy storage apparatus to the bus; and after the charge/discharge circuit discharges the electric energy stored in the energy storage apparatus to the bus, control the first switch to be turned off, control the second switch to be turned on, and control the third switch to be turned off, to enable the electric energy output by the energy storage apparatus to be input to the rectifier circuit, wherein the rectifier circuit is further configured to perform power conversion on the electric energy input by the energy storage apparatus and output the electric energy to the bus.

12. The power supply system according to claim 11, wherein the bus comprises a positive bus and a negative bus, the switch circuit further comprises a fourth switch, a first end of the fourth switch is configured to connect to a neutral wire, and a second end of the fourth switch is connected to the first end of the charge/discharge circuit; and
the controller is further configured to:
in response to the alternating current input by the utility power input being faulty, control the third switch to be turned off, control the fourth switch to be turned on, and control a switching transistor in the charge/discharge circuit to be turned on, to enable a bus at a higher voltage in the positive bus and the negative bus to release the voltage to the neutral wire.

13. The power supply system according to claim 11 or 12, wherein the controller is further configured to:
in response to the alternating current input by the utility power input being restored, control the fourth switch to be turned off, control the third switch to be turned on, and control the charge/discharge circuit to discharge the electric energy stored in the energy storage apparatus to the bus; and after the charge/discharge circuit discharges the electric energy stored in the energy storage apparatus to the bus, control the second switch to be turned off, control the first switch to be turned on, to enable the rectifier circuit to convert the alternating current input by the utility power input into a direct current and supply power to the bus, and control the charge/discharge circuit to charge the energy storage apparatus.

14. The power supply system according to any one of claims 11 to 13, wherein the charge/discharge circuit comprises a second inductor, a fourth switching transistor, a fifth switching transistor, a first capacitor, and a second capacitor;
a first end of the second inductor is connected to the second end of the third switch, and a second end of the second inductor is separately connected to a first end of the fourth switching transistor and a second end of the fifth switching transistor;
a second end of the fourth switching transistor is connected to the positive bus in the bus, and a first end of the fifth switching transistor is connected to the negative bus in the bus; and
the first capacitor is connected between the positive bus and the neutral wire, and the second capacitor is connected between the negative bus and the neutral wire.

15. The power supply system according to claim 12, wherein the charge/discharge circuit comprises a second inductor, a fourth switching transistor, a fifth switching transistor, a first capacitor, and a second capacitor;
a first end of the second inductor is connected to the second end of the third switch, and a second end of the second inductor is separately connected to a first end of the fourth switching transistor and a second end of the fifth switching transistor;
a second end of the fourth switching transistor is connected to the positive bus in the bus, and a first end of the fifth switching transistor is connected to the negative bus in the bus;
the first capacitor is connected between the positive bus and the neutral wire, and the second capacitor is connected between the negative bus and the neutral wire; and
in response to a voltage of the positive bus being higher than a voltage of the negative bus, the controller is configured to control the fourth switching transistor in the charge/discharge circuit to be turned on and control the fifth switching transistor to be turned off; or
in response to a voltage of the negative bus being higher than a voltage of the positive bus, the controller is configured to control the fifth switching transistor in the charge/discharge circuit to be turned on and control the fourth switching transistor to be turned off.
